# EUROPEAN PATENT APPLICATION

(11) **EP 4 425 594 A1**
(43) Date of publication of application: **04.09.2024**
(21) Application number: 22960683.5
(22) Date of filing: 22.12.2022
(51) Int. Cl.: H01M 4/13, H01M 4/133, H01M 10/0525

(54) **SECONDARY BATTERY AND ELECTRICAL DEVICE**

(30) Priority: 26.09.2022 CN 202211175100
(71) Applicant: Sunwoda Mobility Energy Technology Co., Ltd., Shenzhen, Guangdong 518107 (CN)
(72) Inventor: LI, Man, Shenzhen, Guangdong 518107 (CN); CHEN, Yun, Shenzhen, Guangdong 518107 (CN); LIU, Peng, Shenzhen, Guangdong 518107 (CN); CHU, Chunbo, Shenzhen, Guangdong 518107 (CN)
(74) Representative: Stöckeler, Ferdinand
(86) International application number: PCT/CN2022/141190
(87) International publication number: WO 2024/066088

(57) **Abstract**

A secondary battery and an electrochemical device are provided. The secondary battery includes a positive electrode plate, a separator, an electrolyte solution, and a negative electrode plate. The negative electrode plate includes a negative electrode current collector, and a negative electrode active material layer disposed on the negative electrode current collector. Non-faradaic electric quantity of the negative electrode plate is Q C, and Q satisfies: 0.05≤Q≤2.5, wherein Q=Cdl×ΔU, Cdl nF is non-faradaic capacitance of the negative electrode plate, and ΔU V is potential interval of the negative electrode active material layer. The negative electrode plate of the present application can be used in a battery product with high energy density, to better balance the high rate and charge/discharge characteristics, avoid interface deterioration such as lithium precipitation due to poor electrolyte solution infiltration, and effectively reduce the polarization of the electrode plate. Thus, the battery can realize better consistency, long cycle life, excellent rate performance and kinetic performance.

## Description

This application claims priority to Chinese Patent Application No. 202211175100.9, filed on September 26, 2022 and entitled "SECONDARY BATTERY AND ELECTROCHEMICAL DEVICE", which is incorporated herein by reference in its entirety.

### TECHNICAL FIELD

The present application relates to technical field of batteries, and more particularly, to a secondary battery and an electrochemical device.

### BACKGROUND

With rapid development of new energy industry, there is an urgent need for a secondary battery with a larger capacity, a more durability, and a longer-lasting capability. As material of a negative pole is a core for the secondary battery, an effective way to work out the above problems is to improve cycle life of the material of the negative pole while ensuring high capacity of the material of the negative pole. Therefore, to improve cycle performance and cycle life of a secondary battery becomes an urgent problem to be solved.

### SUMMARY OF THE APPLICATION

### TECHNICAL PROBLEM

The present application provides a secondary battery and an electrochemical device for improving cycle performance and cycle life of a battery.

### SOLUTIONS OF THE APPLICATION

### TECHNICAL SOLUTION

According to a first aspect of the present application, a secondary battery includes a positive electrode plate, a separator, an electrolyte solution, and a negative electrode plate, wherein the negative electrode plate includes:
a negative electrode current collector, and a negative electrode active material layer disposed on the negative electrode current collector;
wherein non-faradaic electric quantity of the negative electrode plate is Q C, and Q satisfies: 0.05≤Q≤2.5, wherein Q=CdlX×ΔU;
Cdl nF is non-faradaic capacitance of the negative electrode plate;
ΔU V is potential interval of the negative electrode active material layer .

In some embodiments, the Cdl satisfies: 0.5≤Cdl≤5, and the ΔU satisfies: 0.1≤ΔU≤0.5.

In some embodiments, the negative electrode active material layer includes one or more of artificial graphite, natural graphite, soft carbon, hard carbon, amorphous carbon, carbon fiber carbon nanotubes, or mesocarbon microspheres.

In some embodiments, a surface contact angle θ of the negative electrode active material layer with respect to the electrolyte solution satisfies: 10°≤θ≤40°.

In some embodiments, a resistance of the negative electrode active material layer is R mΩ, and R satisfies: 5≤R≤20.

In some embodiments, the negative electrode active material layer has an OI value ranging from 2 to 15.

In some embodiments, the negative electrode active material layer includes a negative electrode active material, amount percentage of fine powder of the negative electrode active material ranges from 0 to 80%, and amount percentage of coarse powder of the negative electrode active material ranges from 0 to 60%;
wherein the fine powder is a particle in the negative electrode active material having a particle size less than or equal to 2.2µm, and the coarse powder is a particle in the negative electrode active material particles having a particle size greater than or equal to 35µm.

In some embodiments, the amount percentage of the fine powder of the negative electrode active material ranges from 0 to 40%; and
the amount percentage of the coarse powder of the negative electrode active material ranges from 0 to 30%.

In some embodiments, the electrolyte solution includes a lithium salt additive, and the ithium salt additive includes one or more of lithium tetrafluoroborate, lithium bisoxalate borate, lithium difluorophosphate, lithium bistrifluoromethanesulfonimide, and lithium bisfluorosulfonimide.

In some embodiments, the content X of the lithium salt additive in the electrolyte solution satisfies 0.1%≤X≤2%.

In some embodiments, the negative electrode active material layer includes a protective film layer having a thickness H nm, and formula 0.4≤10X·H+Q≤36 is satisfied.

In some embodiments, the thickness H of the protective film layer satisfies: 5≤H≤180.

In a second aspect, an electrochemical device of the present application includes the secondary battery described above.

### BENEFICIAL EFFECT OF THE APPLICATION

### BENEFICIAL EFFECT

Compared with the existing technologies, the secondary battery of the present application is controlled with the non-faradaic electric quantity of the negative electrode plate in the range of 0.05C~2.5C, and the non-faradaic electric quantity of the negative electrode plate satisfying Q=Cdl×ΔU. As such, the negative electrode plate of the present application can be used in a battery product with high energy density, to better balance the high rate and charge/discharge characteristics, avoid interface deterioration such as lithium precipitation due to poor electrolyte solution infiltration, and effectively reduce the polarization of the electrode plate. Thus, the secondary battery can realize better consistency, long cycle life, excellent rate performance and kinetic performance.

### BRIEF DESCRIPTION OF THE DRAWINGS OF THE APPLICATION

### DESCRIPTION OF THE DRAWINGS

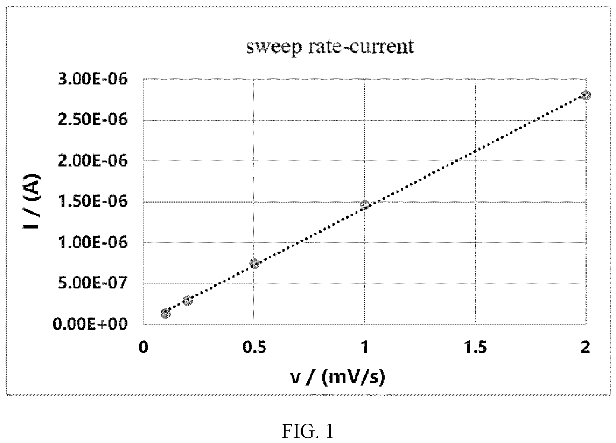

FIG. 1 is a fitting curve of the sweep rate versus current scatter plot of the negative plate prepared in Example 1.

### EMBODIMENTS OF THE APPLICATION

### DETAILED DESCRIPTION OF THE EMBODIMENTS

The present application provides a secondary battery and an electrochemical device, in order to make the purpose, technical solution and effect of the present application clearer and definite, the present application is described in further detail below with reference to the accompanying drawing. It should be understood that the embodiments described herein are merely illustrative of the present application and are not intended to limit the present application.

With development of new energy industry, a higher demand has been put forward for a secondary battery, for example, a lithium-ion battery. Because the lithium-ion battery is used in an electric vehicle, it is necessary to extend its single-life mileage and service life as much as possible. The secondary battery used in the electric vehicle experiences heat release during charging and discharging, resulted in aging of an internal chemical system. Therefore, the secondary battery may cause attenuation of battery performance in a long-term cycle and storage, mainly manifesting as attenuation of capacity of the secondary battery, increase of the internal resistance of the secondary battery, and decrease of power performance of the secondary battery.

In order to improve the above-mentioned problems, the present application provides a negative electrode plate having a specific non-faradaic electric quantity, so that the negative electrode plate can better balance a large rate and a charge/discharge characteristic in a high-energy-density battery product, reduce an interface deterioration phenomenon such as lithium precipitation caused by poor electrolyte solution infiltration, and effectively reduce a polarization phenomenon of the electrode plate. The obtained secondary battery has better consistency, long cycle life, excellent rate performance and excellent kinetic performance.

In an embodiment of the present application, the present application provides a secondary battery including a positive electrode plate, a separator, an electrolyte solution, and a negative electrode plate as described below.

### I. negative electrode plate

The negative electrode plate includes a negative electrode current collector, and a negative electrode active material layer disposed on the negative electrode current collector. The negative electrode active material layer includes a negative electrode active material.

### 1. Non-faradaic electric quantity

A secondary battery according to the present application is characterized in that the non-faradaic electric quantity of the negative electrode plate is QC, which satisfies: 0.05≤Q≤2.5, where Q=Cdl×ΔU, Cdl nF is a non-faradaic capacitance of the negative electrode plate, and ΔU V is the potential interval of the negative electrode active material layer.

The non-faradaic electric quantity of the negative electrode plate is Q C, which satisfies 0.05≤Q≤2.5. For example, the non-faradaic electric quantity Q C of the negative electrode plate may be 0.05 C, 0.07 C, 0.09C, 0.15 C, 0.25 C, 0.53C, 0.78 C, 0.85 C, 0.97 C, 1.2 C, 1.5 C, 1.8 C, 2.0 C, 2.2 C, and 2.5C, or may range between any two of 0.05 C, 0.07 C, 0.09C, 0.15 C, 0.25 C, 0.53C, 0.78 C, 0.85 C, 0.97 C, 1.2 C, 1.5 C, 1.8 C, 2.0 C, 2.2 C, and 2.5C. Note that the specific value of the non-faradaic electric quantity Q is given by way of example only, any value in the range of 0.05 C~2.5C is in the protection range of the present application.

It should be understood that the electrochemical reaction of the secondary battery is mainly a surface reaction occurring on the surface of the electrode. The reaction includes: 1. mass transfer reaction, in which the ions are transferred to the surface of the electrode; 2. a non-faradaic reaction, in which no charge movement occurs across the electrode interface, and the ions physically are adsorbed to and disengaged from the surface of the active material to store and release charges; 3. faradaic reaction, the oxidation of the active material changes, and the charges shift to interior of the active material. The non-faradaic capacitance value (Cdl) can reflect the number of active sites of the negative electrode active material in the negative electrode plate, and can be evaluated according to the curve of the linear sweep voltammetry (LSV) in the non-faradaic reaction interval at different sweeping rates, that is, the current density varies with the sweeping rate. Specifically, the non-faradaic capacitance value (Cdl) influences the number of electrochemical active sites, influences the contact of the material with the electrolyte solution, influences the ion-electron conduction rate, and has a low charge transfer resistance, thereby influencing the rate performance.

According to the present application, the non-faradaic electric quantity of the negative electrode plate is controlled in the above-mentioned range, and the non-faradaic electric quantity of the negative electrode plate is defined to meet Q=Cdl×ΔU, so that the negative electrode plate can better balance the high-rate and charge/discharge characteristics in the high-energy-density secondary battery product, thereby reducing the interface deterioration phenomenon such as lithium precipitation caused by poor electrolyte solution infiltration, and effectively reducing the polarization phenomenon of the electrode plate. Thus, the prepared secondary battery has better consistency, long cycle life, excellent rate performance and excellent kinetic performance. The non-faradaic electric quantity of the negative electrode can be adjusted by controlling the morphology of the negative electrode active material, the compaction density of the negative electrode plate, the OI value of the negative electrode plate, the composition of the negative electrode plate, the process for the slurry of the negative electrode, and the like. The control of the non-faradaic electric quantity of the negative electrode is not limited to the above-described method, and the other method can be applied as long as the negative electrode plate can be controlled to the above-described range.

In an embodiment of the present application, the non-faradaic capacitance Cdl nF of the above-mentioned negative electrode plate satisfies: 0.5≤Cdl≤5. For example, the non-faradaic capacitance Cdl nF of the negative electrode plate may be 0.5nF, 1nF, 1.5nF, 2nF, 2.5nF, 3nF, 3.5nF, 4nF, 4.5nF, and 5n, or may range between any two of 0.5nF, 1nF, 1.5nF, 2nF, 2.5nF, 3nF, 3.5nF, 4nF, 4.5nF, and 5n. It should be noted that the specific value of the non-faradaic capacitance Cdl nF is given by way of example only, any value in the range of 0.5nF~5nF is in the protection range of the present application. In the present application, by controlling the non-faradaic capacitance Cdl nF of the negative electrode plate in the range of 0.5nF~5nF, the electrolyte solution is facilitated to contact with the material, the conduction rate of ions and electrons is accelerated, the charge transfer resistance is low, and the rate performance can be effectively increased.

In an embodiment of the present application, the non-faradaic capacitance Cdl nF of the negative electrode plate satisfies: 1.3≤Cdl≤4.7.

In an embodiment of the present application, the non-faradaic capacitance Cdl nF of the above-mentioned negative electrode plate satisfies: 1.4≤Cdl≤4.3. As the non-faradaic capacitance of the negative electrode plate is in the above-mentioned range, the number of active sites of the negative electrode active material in the negative electrode plate is in a more suitable range. Thus, the secondary battery has better overall performance.

In an embodiment of the present application, the potential interval ΔU V of the negative electrode active material layer satisfies: 0.1≤ΔU≤0.5. For example, the potential interval ΔU V of the negative electrode active material layer may be0.1V, 0.15V, 0.2V, 0.25V, 0.3V, 0.35V, 0.4V, 0.45V, and 0.5V, or may range between any two of 0.1V, 0.15V, 0.2V, 0.25V, 0.3V, 0.35V, 0.4V, 0.45V, and 0.5V. Note that the specific value of the potential interval ΔU V is given by way of example only, any value in the range of 0.1V~0.5V is in the protection range of the present application. In the present application, by controlling the potential interval ΔU V of the negative electrode active material layer in the range of 0.1V~0.5V, the electrolyte solution is facilitated to contact with the material, the conduction rate of ions and electrons is accelerated, the charge transfer resistance is low, and the rate performance can be effectively increased.

### 2. Negative electrode active material layer

The negative electrode active material layer may be a single-layer structure or a multiple-layer structure. In a case that the negative electrode active material layer is a multiple-layer structure, and each sub-layer of the negative electrode active material layer may have the same or different negative electrode active material. In an embodiment of the present application, the chargeable capacity of the negative electrode active material is greater than the discharge capacity of the positive electrode active material to prevent lithium metal from precipitating on the negative electrode plate during charging.

In an embodiment of the present application, the negative electrode active material layer includes, but not limited to, artificial graphite, natural graphite, soft carbon, hard carbon, amorphous carbon, carbon fiber carbon nanotubes, and mesocarbon microspheres. The above-mentioned negative electrode active material may be used alone or in any combination.

In an embodiment of the present application, the negative electrode active material layer includes, but is not limited to, petroleum coke and needle coke having a smaller microcrystalline structure, a more damascene structure, and a less streamlined structure. The above-mentioned negative electrode active material may be used alone or in any combination. The negative electrode active material layer is made of a material having the above-mentioned structural characteristics, so that the negative electrode plate is better in isotropy and rate performance, thereby ensuring lower impedance and material stability in the cycle.

The microcrystalline structure, damascene structure and streamlined structure of the negative electrode active material can be observed using a scanning electron microscope (SEM).

In an embodiment of the present application, the surface of the negative electrode active material may have a coating layer, and the coating layer may be a single-layer structure or a double-layer structure. For example, the surface of the negative electrode active material is coated with soft carbon, and the soft carbon can accelerate electron conduction, thereby protecting the structure of the graphite itself while improving the electrical conductivity of the material. The surface of the negative electrode active material is coated with an inorganic material, so that a thin and dense SEI film layer is formed, a stable chemical and electrochemical reaction interface is provided, and long-cycle performance of the material can be improved.

It should be understood that the present application can maintain graphite integrity by using a double-layer structure for coating while effectively suppressing side reactions in a secondary battery. By adjusting the inner and outer coating agents and the coating process, the electron conduction and the ion conduction of the material can be effectively regulated, thereby effectively regulating the speed of the non-faradaic process of the electrode and further regulating the performance of the battery.

The coating layer on the negative electrode active material layer can be observed using a transmission electron microscope (TEM).

In an embodiment of the present application, the surface contact angleθof the negative electrode active material layer with respect to the electrolyte solution is defined, which satisfies: 10°≤θ≤40°. For example, the surface contact angleθof the negative electrode active material layer with respect to the electrolyte solution may between the range of 10°, 15°, 20°, 25°, 30°, 35°, and 40°.

The surface contact angle of the negative electrode active material layer with respect to the electrolyte solution can reflect the surface properties of the negative electrode active material layer. In a case that the wetting contact angle of the negative electrode plate with the electrolyte solution is small, the electrolyte solution is immediately adsorbed with dropping on the negative electrode plate, which indicates that the compatibility of the negative electrode plate with the electrolyte solution is better. Therefore, the electrolyte solution can be in close contact with the surface active sites of the negative electrode plate and improve the diffusion efficiency of lithium-ions to the graphite surface in the electrolyte solution, which is an advantageous advantage of excellent kinetic properties.

According to the present application, the surface contact angle of the negative electrode active material layer with respect to the electrolyte solution is controlled to be in the above range. On one hand, the surface contact angle of the negative electrode active material layer with respect to the electrolyte solution is in the above range, so that the negative electrode plate has fewer defects such as pinholes or pits. The greater the tendency of the electrolyte solution to expand on the negative electrode plate, the greater the wettability, and the better the compatibility of the electrolyte solution, so that the lithium-ions are more easily transferred in the negative electrode plate. It is beneficial to reduce the internal resistance of the battery, to avoid defects such as lithium precipitation, increased by-products, and poor kinetic performance due to poor infiltration, and to improve the rate performance and prolong the cycle life. On the other hand, the standing time after liquid injection to the secondary battery can be shortened, the infiltration rate of the electrolyte solution to the negative electrode plate is improved, the production efficiency and the yield rate are improved, the interface of the prepared battery electrode is more uniform, the interface current density in the charge/discharge process is more uniform, and the battery kinetic performance and cycle life are improved.

In an embodiment of the present application, the surface contact angleθof the negative electrode active material layer with respect to the electrolyte solution is defined, which satisfies: 12°≤θ≤35°. In a case that the surface contact angle of the negative electrode active material layer with respect to the electrolyte solution is in the above-mentioned range, the surface of the negative electrode plate is less defective, and the battery has higher production efficiency and yield, so that the overall performance of the battery is better.

In an embodiment of the present application, the surface contact angleθof the negative electrode active material layer with respect to the electrolyte solution can be measured using an optical contact angle meter according to the GB/T 30447-2013 nanometer film contact angle measurement method.

The electrolyte solution includes lithium salt (lithium hexafluorophosphate), organic solvent (cyclic carbonate and chain carbonate), and electrolyte solution additive.

In an embodiment of the present application, the resistance of the negative electrode active material layer is R mΩ, which satisfies: 5≤R≤20. For example, the resistance R mΩ of the negative electrode active material layer may be 5 mΩ, 7.5 mΩ, 10mΩ, 12.5mΩ, 15 mS2, 17.5 mΩ, and 20 mΩ, or may range between of any two of 5 mΩ, 7.5 mΩ, 10mΩ, 12.5mΩ, 15 mS2, 17.5 mQ, and 20 mΩ.

It should be understood that factors influencing the resistance of the negative electrode plate of the secondary battery include the interface between the current collector and the active material layer, the conductive agent distribution, the inter-particle contact, and the like. The resistance of the active material layer of the negative electrode plate may reflect the state and performance of the material in the negative electrode plate. A lower resistance of the active material layer can be obtained by adjusting parameters such as interface between the current collector and the active material layer, the conductive agent distribution, the inter-particle contact, and the like. The negative electrode plate having the resistance in the above-mentioned range has a relatively high electron transmission efficiency, a relatively low resistance between the current collector and the electrode active material layer, so that direct current internal resistance of the battery can be effectively reduced, power performance of the battery can be improved, and the phenomenon such as large polarization and lithium precipitation of the battery does not easily occur in a long-term cycle process, thereby effectively improving cycle performance of the battery. Meanwhile, the resistance of the negative electrode active material layer is low, and the lithium-ion transmission path is shortened.

In an embodiment of the present application, the resistance R mΩ of the negative electrode active material layer is defined, which satisfies: 5≤R≤18. In a case that the battery with the resistance R mΩ in the above range has better power performance and cycle performance.

In an embodiment of the present application, the resistance of the negative electrode active material layer is R mΩ, which satisfies: 5≤R≤12. In a case that the resistance R mΩ is in the above range, the interface between the negative electrode current collector and the negative electrode active material layer, the conductive agent distribution, and the inter-particle contact are preferable, thus, the battery has better overall performance.

In an embodiment of the present application, the resistance R mΩ of the negative electrode active material layer is measured by the following.

A wafer having an area of 1540.25mm² is cut from the negative electrode plate provided with the negative electrode active material layer on both sides. The cut negative electrode plate is placed in the middle of the probe of the membrane resistance tester, and then is tested with the membrane resistance tester, to obtain the measured resistance of the negative electrode active material layer of the negative electrode plate. Ten negative electrodes are collected and measured to obtain ten measured resistances, and an average value is obtained from ten measured resistances. That is, the average value is the value of the resistance of the negative electrode active material layer.

In an embodiment, the negative electrode active material layer has an OI value of 2~15. For example, the negative electrode active material layer may have an OI value may be 2, 4, 6, 8, 10, 12, and 15, or may range between any two of 2, 4, 6, 8, 10, 12, and 15. It should be noted that the specific values of the OI values are given by way of example only, any value in the range of 2~15 is in the protection range of the present application.

Wherein the OI value of the negative electrode active material layer refers to an intensity ratio of an X-ray diffraction peak of the negative electrode active material layer on the 004 crystal plane to the 110 crystal plane.

It should be appreciated that the OI value (C004/C110) of the negative electrode plate can affect the lithium-ion transmission path. During the lithium insertion process, lithium-ions would enter the interlayers from the end face of the graphite of the negative electrode material, and solid-phase diffusion is performed between the interlayers to complete the lithium insertion process. The end face of the graphite with a small isotropic microcrystalline structure is exposed to the surface of the electrode plate.

Therefore, in the case where the densification density of the negative electrode plate is consistent with the coated area density, with the OI value of the negative electrode plate in the above range, the migration path of the lithium-ion can be affected, the migration speed of the lithium-ion can be affected, and the electrochemical reaction kinetics can be affected, thereby further achieving high-rate discharge performance of the lithium-ion and ensuring low impedance in the cycle process. In addition, with the OI value of the negative electrode plate is in the above range, the expansion between interlayers of the graphite can be suppressed, the high stability of the material structure in the cycle process is ensured, the cycle performance is improved, and the purpose of increasing the rate charge capability and optimizing the cycle is achieved.

In an embodiment of the present application, the OI value of the electrode plate is facilitated to be controlled by the control of the OI value of the negative electrode active material. The OI value of the negative electrode active material can be changed by adjusting the physical and chemical characteristics of the particles of the negative electrode active material, the electrical resistance of the powder, and the like. The OI value of the negative electrode plate can also be adjusted by adjusting factors such as the proportion of the conductive agent, the stirring process, the rolling process, and the like.

In the present application, the OI value of the negative electrode active material layer is controlled in the above range, so that the migration path of the lithium-ion is shortened, the rapid migration of the lithium-ion is realized, and the electrochemical reaction kinetics is accelerated, thereby further achieving high-rate discharge performance of the lithium-ion and ensuring low impedance in the cycle process. Meanwhile, the expansion between interlayers of the graphite can be suppressed, the high stability of the material structure in the cycle process is ensured, the cycle performance is improved, and the purpose of increasing the rate charge capability and optimizing the cycle is achieved.

In an embodiment of the present application, the OI value of the negative electrode active material layer ranges from 2 to 10. With the OI value of the negative electrode active material layer in the above range, the battery has a better overall performance.

In an embodiment of the present application, the negative electrode active material layer has a negative electrode active material including, but not limited to, artificial graphite, natural graphite, soft carbon, hard carbon, amorphous carbon, carbon fiber carbon nanotubes, and mesocarbon microspheres. The above-mentioned negative electrode active material may be used alone or in any combination.

In an embodiment of the present application, the negative electrode active material layer includes, but is not limited to, petroleum coke and needle coke having a smaller microcrystalline structure, a more damascene structure, and a less streamlined structure. The above-mentioned negative electrode active material may be used alone or in any combination.

The amount percentage of the fine powder of the negative electrode active material ranges from 0 to 80%. For example, the amount percentage of the fine powder of the negative electrode active may be 0, 10%, 20%, 30%, 40%, 50%, 60%, 70%, and 80%, or may range between any two of 0, 10%, 20%, 30%, 40%, 50%, 60%, 70%, and 80%. It should be noted that the specific value of the amount percentage of the fine powder is given by way of example only, any value in the range of 0-80% is in the protection range of the present application.

The amount percentage of the coarse powder of the negative electrode active material ranges from 0 to 60%. For example, the amount percentage of the coarse powder of the negative electrode active may be 0, 10%, 20%, 30%, 40%, 50%, and 60%, or may range between any two of 0, 10%, 20%, 30%, 40%, 50%, and 60%. It should be noted that the specific value of the amount percentage of the coarse powder is given by way of example only, any value in the range of 0-60% is in the protection range of the present application.

The fine powder refers to a particle having a particle size less than or equal to 2.2µm in the negative electrode active material, and the coarse powder refers to a particle having a particle size greater than or equal to 35µm in the negative electrode active material.

In an embodiment of the present application, the amount percentage of the fine powder of the negative electrode active material ranges from 0 to 40%. For example, the amount percentage of the fine powder of the negative electrode active may be 0, 10%, 15%, 20%, 25%, 30%, 35%, and 40%, or may range between any two of 0, 10%, 15%, 20%, 25%, 30%, 35%, and 40%.

The amount percentage of the coarse powder of the negative electrode active material ranges from 0 to 30%. For example, the amount percentage of the coarse powder of the negative electrode active may be 0, 10%, 15%, 20%, 25%, and 30%, or may range between any two of 0, 10%, 15%, 20%, 25%, and 30%.

It should be appreciated that, the less amount percentage of the fine powder of the negative electrode active material indicates that the negative electrode active material has less particles with particle sizes less than or equal to 2.2µm in the negative electrode active material, and the less amount of the coarse powder of the negative electrode active material indicates that the negative electrode active material has less particles with particle sizes greater than or equal to 35µm in the negative electrode active material. Both the less amount percentage of the fine powder and the less amount percentage of the coarse powder are provided to prevent the void formed by the excessive large particles in the negative electrode active material from being filled with the excessive small particles in the negative electrode active material particles, thereby increasing the gap between the particles of the negative electrode active material, facilitating the non-faradaic reaction in the battery. As a result, the non-faradaic capacitance Cdl of the negative electrode plate is increased, and the number of electrochemical active sites is increased, thereby facilitating the contact of the material with the electrolyte solution, accelerating the ion-electron conduction rate, lowing charge transmission resistance, and effectively improving the rate performance of the secondary battery.

It should be understood that in the present application, the amount percentage of the fine powder of the negative electrode active material can be controlled in the range of 0-40%, while the amount percentage of the coarse powder of the negative electrode active material can be controlled in the range of 0-30%. By defining the ranges of the fine powder and the coarse powder, the distribution width of the particle size of the negative electrode active material can be limited, the particle size distribution of the negative electrode active material is more concentrated, and the morphology of the negative electrode active material is more regular. Thus, the isotropy of the negative electrode active material is ensured to be better, the electron conduction and the ion transmission of the negative electrode active material are improved, and the non-faradaic process of the electrode can be effectively controlled.

In an embodiment of the present application, the amount percentage of the fine powder of the negative electrode active material and the amount percent of the coarse powder of the negative electrode active material can be obtained by performing a particle size distribution test on the negative electrode active material by using a laser particle size meter to calculate the peak area corresponding to the fine powder and the coarse powder. That is, a specific value of the amount percentage of the fine powder of the negative electrode active material and the amount percentage of the coarse powder of the negative electrode active material can be obtained.

In an embodiment of the present application, the negative electrode active material layer 120 includes a protective film layer 130 having a thickness H nm satisfying: 5≤H≤180. For example, the thickness H nm of the protective film layer may be5 nm, 30 nm, 60 nm, 90nm, 120nm, 150 nm, and 160nm; or may range between any two of 5 nm, 30 nm, 60 nm, 90nm, 120nm, 150 nm, and 160nm. It should be noted that the specific value of the thickness H nm is given by way of example only, any value in the range of 5 nm ~180nm is in the scope of protection of the present application. With the thickness of the protective film layer in this range, it is possible to better protect the negative electrode active material while reducing effects such as internal resistance increase due to the protective film layer.

The thickness of the protective film layer can be obtained using TEM test.

### 3. Negative electrode current collector

In an embodiment of the present application, the negative electrode current collector includes, but not limited to, a metal foil, a metal cylinder, a metal tape roll, a metal plate, a metal film, a metal plate mesh, a stamped metal, a foamed metal, and the like. In an embodiment, the negative electrode current collector is a metal foil. In another embodiment, the negative electrode current collector is copper foil. As used herein, the term "copper foil" includes copper alloy foil.

### 4. Test and calculation of non-faradaic electric quantity of negative electrode plate

In an embodiment of the present application, the present application further provides a method for testing and calculating a non-faradaic electric quantity of a negative electrode plate, which is used for testing and calculating the non-faradaic electric quantity of the negative electrode plate described in any embodiment of the above. The method specifically includes the steps of:
S1: assembling a negative electrode plate into a button battery, and performing a cyclic voltammetry test on the button battery to obtain a potential interval U V of the button battery;
S2: selecting the potential interval U of the button battery in step S1, performing a linear sweeping voltammetry test on the button battery to obtain a sweep rate-voltage curve and a voltage-current curve, and obtaining a potential interval ΔU V of a negative electrode active material layer based on the voltage-current curve, wherein a sweep direction is from a low potential to a high potential;
S3: according to step S2, acquiring a sweep rate-current scatter plot, and obtaining a non-faradaic capacitance Cdl of a negative electrode plate based on the sweep rate-current scatter plot;
S4: obtaining the potential interval ΔU and the non-faradaic capacitance Cdl in step S2 and step S3, and calculating a non-faradaic electric quantity Q based on Q=Cdl×ΔU.

In an embodiment of the present application, the step of assembling the negative electrode plate into the button battery in step S1 specifically includes: disassembling the secondary battery in a glove box or a drying room to obtain the negative electrode plate in the overhang region, soaking the negative electrode plate with a dimethyl carbonate (DMC) solution, and assembling the negative electrode plate with the lithium metal plate after cutting to form the button battery. Negative electrode plates that are not assembled into a battery may also be used.

Here, the overhang region refers to a portion in which the length and/or width of the negative electrode plate exceeds the positive electrode plate.

The button battery in step S1 includes a positive electrode case, a negative electrode plate, a separator, an electrolyte solution, a lithium plate, nickel foam, a gasket, and a negative electrode case.

In an embodiment of the present application, the potential interval U V of the button battery described in step S1 satisfies: 2.5≤U≤3. For example, the potential interval U V of the button battery may be 2.5V, 2.6V, 2.7V, 2.8V, 2.9V, and 3V, or may range between any two of 2.5V, 2.6V, 2.7V, 2.8V, 2.9V, and 3V. It should be noted that the specific value of the potential interval U V is given by way of example only, any value in the range of 2.5V~3V is in the protection range of the present application.

In an embodiment of the present application, the sweep rate in the cyclic voltammetry test in step S1 is V₁, which satisfies: 0.1mV/s≤V₁≤1mV/s. For example, the sweep rate V₁ may be 0.1mV/s, 0.2mV/s, 0.3mV/s, 0.4mV/s, 0.5mV/s, 0.6mV/s, 0.7mV/s, 0.8mV/s, 0.9mV/s, and 1mV/s, or may range between any two of 0.1mV/s, 0.2mV/s, 0.3mV/s, 0.4mV/s, 0.5mV/s, 0.6mV/s, 0.7mV/s, 0.8mV/s, 0.9mV/s, and 1mV/s. Note that the specific value of the sweep rate V1 is given by way of example only, any value in the range of 0.1mV/s -1mV/s is in the protection range of the present application.

It should be understood that according to the method for testing and calculating a non-faradaic electric quantity of a negative electrode plate proposed in the present application, the cyclic voltammetry (CV) has the advantages of simplicity in manufacture, simplicity in operation, accuracy and stability of test data, safety and environmental protection, and has practical application value.

In an embodiment of the present application, the potential interval ΔU V of the negative electrode active material layer in step S2 satisfies: 0.1≤ΔU≤0.5. For example, the potential interval ΔU V of the negative electrode active material layer may be 0.1V, 0.15V, 0.2V, 0.25V, 0.3V, 0.35V, 0.4V, 0.45V, and 0.5V, or may range between any two of 0.1V, 0.15 V, 0.2V, 0.25V, 0.3V, 0.35V, 0.4V, 0.45V, and 0.5V. Note that the specific value of the potential interval ΔU V is given by way of example only, any value in the range of 0.1V~0.5V is in the protection range of the present application.

In an embodiment of the present application, the sweep rate V₂ in the linear sweep voltammetry in step S2 satisfies: 0.05mV/s≤V2≤5mV/s. For example, the sweep rate V₂ may be 0.05mV/s, 0.5mV/s, 1mV/s, 1.5mV/s, 2mV/s, 2.5mV/s, 3mV/s, 3.5mV/s, 4mV/s, 4.5mV/s, and 5mV/s, or may range between any two of 0.05mV/s, 0.5mV/s, 1mV/s, 1.5mV/s, 2mV/s, 2.5mV/s, 3mV/s, 3.5mV/s, 4mV/s, 4.5mV/s, and 5mV/s. Note that the specific value of the sweep rate V₂ is given by way of example only, s any value in the range of 0.05mV/s ~5mV/s is in the protection range of the present application.

In an embodiment of the present application, in step S3, according to step S2, a sweep rate-current scatter plot is acquired, and the step of acquiring a non-faradaic capacitance Cdl of the negative electrode plate based on the sweep rate-current scatter plot includes:
performing a linear sweep voltammetry on the button battery to obtain a plurality of sweep rates, and obtaining a plurality of voltage median values according to the sweep rate-voltage curve acquired in step S2, wherein each sweep rate corresponds to a corresponding one of the voltage median values;
obtaining a plurality of current values based on the obtained plurality of voltage median values and a voltage-current curve, wherein each current value corresponds to a corresponding one of the voltage median values;
establishing a mapping relationship between a sweep rate and a current value based on a correspondence relationship between each sweep rate and a corresponding one of the voltage median values and a correspondence relationship between each current value and a corresponding one of the voltage median values, to obtain a sweep rate-current scatter plot;
fitting and obtaining a linear function from a sweep rate-current scatter plot, wherein a slope of the linear function is the non-faradaic capacitance Cdl of the negative electrode plate.

### 5. Preparation of negative electrode plate

The negative electrode plate in the secondary battery of the present application may be prepared using any known method. For example, a slurry is prepared by adding a conductive agent, a binder, an additive, a solvent, and the like to a negative electrode active material, and then the slurry is coated on a negative electrode current collector, and after drying, an electrode is formed by pressing.

### II. Electrolyte solution

The electrolyte solution used in the secondary battery of the present application includes an electrolyte and a solvent for dissolving the electrolyte.

### 1. Additive

In an embodiment of the present application, the electrolyte solution includes, but not limited to, a lithium salt additive. The lithium salt additive includes, but not limited to, lithium tetrafluoroborate (abbreviated as LiBF₄), lithium bisoxaloborate (abbreviated as LiBOB), lithium difluorophosphate (abbreviated as LiPO₂F₂), lithium bistrifluoromethanesulfonimide (abbreviated as LiTFSI), and lithium bisfluorosulfonimide (abbreviated as LiFSI). The above lithium salt additives may be used alone or in any combination.

In an embodiment of the present application, the content X of the lithium salt additive in the electrolyte solution is defined based on the mass of the electrolyte solution, which satisfies 0.1%≤X≤2%. For example, the content X of the lithium salt additive in the electrolyte solution may be 0.1%, 0.4%, 0.7%, 1%, 1.3%, 1.6%, and 2%, or may range between any two thereof. It should be noted that the specific value of the content X is given by way of example only, any value in the range of 0.1%~2% is in the scope of protection of the present application.

In an embodiment of the present application, the content X of the lithium salt additive in the electrolyte solution, the thickness H of the protective film layer, and the non-faradaic electric quantity Q of the negative electrode plate satisfy 0.4≤10X·H+Q≤36. With the above range, the battery has better overall performance.

### 2. Electrolyte

The electrolyte is not particularly limited in the present application, and a material known as an electrolyte can be used arbitrarily as long as the effect of the present application is not affected. In the case of a secondary battery, a lithium salt is generally used. In embodiments of the present application, the electrolyte includes, but not limited to, LiPF6.

Meanwhile, the content of the electrolyte is not particularly limited in the present application, so long as the effect of the present application is not affected. For example, 0.8mo1/L~2.2mo1/L may be used.

### 3. Solvent

The solvent is not particularly limited in the present application, and a material known as a solvent can be used arbitrarily as long as the effect of the present application is not affected.

In an embodiment of the present application, the solvent includes, but is not limited to, ethylene carbonate (EC), propylene carbonate (PC), diethyl carbonate (DEC), methyl ethyl carbonate (EMC), dimethyl carbonate (DMC), butylene carbonate (BC), and methyl ethylene carbonate (MEC). The above solvents may be used alone or in any combination.

### III. Positive electrode plate

The positive electrode plate includes a positive electrode current collector, and a positive electrode active material layer disposed on the positive electrode current collector.

### 1. Positive electrode active material layer

The positive electrode active material layer may be provided with a single-layer structure or a multiple-layer structure. In a case that the positive electrode active material layer is a multiple-layer structure, and each sub-layer of the positive electrode active material layer may have the same or different positive electrode active material. The positive electrode active material is any material capable of reversibly inserting and removing metal ions such as lithium-ions.

### Positive electrode active material

The positive electrode active material layer includes, but is not limited to, a positive electrode active material. The positive electrode active material includes, but is not limited to, lithium cobaltate, lithium manganate, lithium iron phosphate (LFP), and a ternary material.

In an embodiment of the present application, the ternary material includes, but is not limited to, lithium nickel cobalt manganate, and lithium nickel cobalt aluminate.

In an embodiment of the present application, the positive electrode active material includes lithium nickel cobalt manganite. An amount of nickel element is greater than or equal to 0.5 based on the molar amount of 1 of nickel element, cobalt element and manganese element in the lithium nickel cobalt manganate.

In an embodiment of the present application, the positive electrode active material includes lithium nickel cobalt manganite. An amount of nickel element is less than or equal to 0.85 based on the molar amount of 1 of nickel element, cobalt element and manganese element in the lithium nickel cobalt manganate.

In an embodiment of the present application, the positive electrode active material includes at least one of NCM523, NCM622 or NCM811.

In an embodiment of the present application, the positive electrode active material may further include a doping element, which may include elements such as aluminum, magnesium, titanium, and zirconium, so long as the structure of the positive electrode active material is more stable.

In an embodiment of the present application, the positive electrode active material may further include a coating element, which may include elements such as aluminum, magnesium, titanium, and zirconium, so long as the structure of the positive electrode active material is more stable.

### Positive conductive agent

The type of the positive electrode conductive agent in the present application is not limited, and any known conductive material may be used so long as the effect of the present application is not affected.

In embodiments of the present application, the positive electrode conductive agent may include, but is not limited to, graphite such as natural graphite, artificial graphite, and the like; carbon black such as acetylene black; carbon material such as amorphous carbon (such as needle coke); carbon nanotubes; graphene and the like. The positive conductive material may be used alone or in any combination.

### Positive electrode binder

The type of the positive electrode binder used in the production of the positive electrode active material layer is not particularly limited, as long as the effect of the present application is not affected. Specifically, in the case of the coating method, a material which is soluble or dispersible in the liquid medium used in the manufacture of the electrode is sufficient.

In an embodiment of the present application, the positive electrode binder includes, but is not limited to, polyethylene, polypropylene, polyethylene terephthalate, polymethyl methacrylate, polyimide, aromatic polyamide, cellulose, nitrocellulose. The positive electrode conductive materials described above may be used alone or in any combination.

### 2. Positive current collector

The positive current collector is not particularly limited, and may be any known material suitable for use as the positive current collector, so long as the effect of the present application is not affected.

In an embodiment of the present application, the positive current collector may include, but is not limited to, metal materials such as aluminum, stainless steel, nickel plating, titanium, tantalum, and the like; and carbon materials such as carbon cloth and carbon paper. In an embodiment, the positive current collector is a metal material. In an embodiment, the positive current collector is aluminum foil.

### 3. Preparation of positive electrode plate

The positive electrode plate in the secondary battery of the present application may be prepared using any known method. For example, a slurry is prepared by adding a conductive agent, a binder, a solvent, and the like to a positive electrode active material, and then the slurry is coated on a positive electrode current collector, and after drying, an electrode is formed by pressing. The negative electrode active material may be roll formed into a plate electrode, or may be formed into a particle electrode by compression molding.

### IV. separator

In order to prevent short circuit, a separator is generally provided between the positive electrode and the negative electrode. In this case, the electrolyte solution of the present application is generally infiltrated to the separator.

The material, shape, thickness, porosity, and average pore diameter of the separator are not particularly limited in the present application, so long as the effect of the present application is not affected.

The present application further provides an electrochemical device including the secondary battery as described above.

The electrochemical device may be a battery pack or a battery module.

The present application further provides a power consumption device including an electric vehicle, an energy storage battery, and the like.

The preparation of lithium-ion battery is described in connection with examples, and it should be understood by those skilled in the art that the preparation method described in this application is exemplified only, and any other suitable preparation methods are in the scope of this application.

The following describes an example and comparative example of a lithium-ion battery according to the present application for performance evaluation.

### Example 1

### I. Preparation of lithium-ion battery

### 1. Preparation of positive electrode plate

A positive electrode active material, a positive electrode conductive agent, and a positive electrode binder are mixed with mass ratio of 96: 2: 2, then a solvent is added to prepare a positive electrode slurry. The obtained positive electrode slurry is uniformly coated on both sides of a positive electrode current collector (aluminum foil). With 120°C for drying, a positive electrode plate is obtained after rolling and cutting.

The positive electrode active material is NCM622, the positive electrode conductive agent is carbon black, the positive electrode binder is polyvinylidene fluoride (PVDF), and the solvent is N-methyl pyrrolidone (NMP).

### 2. Preparation of negative electrode plate

A petroleum coke with a volatile fraction of 15% and an ash fraction of 0.3% is pulverized and premixed in a roll mill, wherein a particle size of the pulverized petroleum coke is 10 µm.

The pulverized product is subjected to high-temperature graphitization in a protective atmosphere, wherein the high-temperature is 2800-3200°C, the holding time for the maximum temperature is 36h, and the protective atmosphere is argon.

The product from the graphitization is polished and reshaped in a continuous reshaping system for 8h to smooth the surface of the material.

The graphite, soft carbon of a first coating material and a solvent are mixed at a temperature of 250°C. The mixed solution thereof is vacuumed to remove the solvent, and then is performed heat treatment in a horizontal kettle at a temperature of 650° C for 12h, to obtain a first mixture.

The first mixture is added to a certain concentration of aluminum chloride solution, and then the ammonia is added to keep the pH of the solution. The solution is hydrolyzed for 8h, then filtering the solution, and washing repeatedly with deionized water and alcohol. After drying, the solution is performed with heat treatment in a horizontal kettle at 600 °C for 5h to obtain composite graphite coating product coated by aluminum oxide, and finally the composite graphite coating product is demagnetized and sieved to obtain a final graphite product.

The artificial graphite finished as above, carbon black, sodium carboxymethyl cellulose, styrene-butadiene rubber and a solvent are stirred in a certain proportion by a vacuum mixer to obtain a negative electrode slurry, and the prepared negative electrode slurry is uniformly coated on both sides of a negative electrode current collector (copper foil). Then, after baking and drying, a negative electrode plate is obtained by rolling and cutting, wherein temperature for baking is 90-110°C.

In the negative electrode slurry as dry powder, the mass ratio of artificial graphite, carbon black, sodium carboxymethyl cellulose, and styrene-butadiene rubber is 96.5: 1.5: 1.5: 0.5 by mass percent.

The surface contact angleθof the negative electrode active material layer with respect to the electrolyte solution is 21°, the resistance R mΩ of the negative electrode active material layer is 9mΩ, the OI value of the negative electrode active material layer is 4.4, the amount percent of fine powder of the negative electrode active material is 20%, and the amount percent of coarse powder of the negative electrode active material is 0.

### 3. Preparation of electrolyte solution

An electrolyte solution is prepared by mixing ethylene carbonate (EC), methyl ethyl carbonate (EMC), and diethyl carbonate (DEC) at a volume ratio of 1:1:1, and then adding 1 mol/L LiPF6.

### 4. Preparation of separator

A PP film is used as the separator.

### 5. Preparation of lithium-ion battery

The negative electrode plate and the positive electrode plate prepared by the above steps are dried, and then wound together with the separator to prepare a wound electric core. The positive electrode aluminum tab and the negative electrode copper nickel-plated tab are welded to the electric core, and the welded electric core is placed in an aluminum-plastic film which has been pitting for encapsulation. Then, an electrolyte solution is injected, formation and capacity grade are performed to obtain a lithium-ion battery.

### II. Test Methods

### 1. Method for testing and calculating non-faradaic electric quantity

S1: assembling a negative electrode plate into a button battery, and performing a cyclic voltammetry test on the button battery to obtain a potential interval U V of the button battery;
S2: selecting the potential interval U V of the button battery in step S1, performing a linear sweeping voltammetry test on the button battery to obtain a sweep rate-voltage curve and a voltage-current curve, and obtaining a potential interval ΔU V of a negative electrode active material layer based on the voltage-current curve, wherein a sweep direction is from a low potential to a high potential;
S3: referring to FIG. 1 and according to step S2, acquiring a sweep rate-current scatter plot, and obtaining a non-faradaic capacitance Cdl nF of a negative electrode plate based on the sweep rate-current scatter plot;
S4: obtaining the potential interval ΔU V and the non-faradaic capacitance Cdl nF in step S2 and step S3, and calculating a non-faradaic electric quantity Q based on Q=Cdl×ΔU.

Here, the non-faradaic electric quantity Q C of the negative electrode plate is 0.28C, the non-faradaic capacitance Cdl nF of the negative electrode plate is 1.4nF, and the potential interval ΔU V of the negative electrode active material layer is 0.2V.

### 2. Method for testing cycle performance of lithium-ion battery

The lithium-ion battery is stood for 30 minutes at 25°C, then discharged at a constant current rate of 1 C, and stood for 10 minutes. Then the lithium-ion battery is charged at a constant current rate of 1 C, and stood for 10 minutes. Then the lithium-ion battery is subjected to a full charge/discharge cycle test until the capacity of the lithium-ion battery is greater than 80% of the initial capacity. The cycle number of the test is recorded.

### 3. Method for testing high-temperature cycle performance of lithium-ion battery

The lithium-ion battery is stood for 30 minutes at 45°C , then discharged at a constant current rate of 1 C, and stood for 10 minutes. Then the lithium-ion battery is charged at a constant current rate of 1 C, and stood for 10 minutes. Then the lithium-ion battery is subjected to a full charge/discharge cycle test, and the intimal capacity before first charge/discharge is recorded, and the capacity after 2000 cycles is recorded. The capacity retention rate =2000 cycles of discharge capacity/first discharge capacity ×100% is calculated.

### Example 2

A lithium-ion battery is prepared according to the method of Example 1, while the lithium-ion battery is tested according to the test method in Example 1, except the following.

The non-faradaic electric quantity Q C of the negative electrode plate is 0.07C, the non-faradaic capacitance Cdl nF of the negative electrode plate is 0.7nF, the potential interval ΔU V of the negative electrode active material layer is 0.1V, the surface contact angleθof the negative electrode active material layer with respect to the electrolyte solution is 35°, the resistance R mΩ of the negative electrode active material layer is 18mS2, the OI value of the negative electrode active material layer is 5, the amount percentage of fine powder of the negative electrode active material is 60%, and the amount percentage of coarse powder of the negative electrode active material is 50%.

### Example 3

A lithium-ion battery is prepared according to the method of Example 1, while the lithium-ion battery is tested according to the test method in Example 1, except the following.

The non-faradaic electric quantity Q C of the negative electrode plate is 2C, the non-faradaic capacitance Cdl nF of the negative electrode plate is 4.0nF, the potential interval ΔU V of the negative electrode active material layer is 0.5V, the surface contact angleθof the negative electrode active material layer with respect to the electrolyte solution is 22°, the resistance R mΩ of the negative electrode active material layer is 8mΩ, the OI value of the negative electrode active material layer is 2.5, the amount percentage of fine powder of the negative electrode active material is 35%, and the amount percentage of coarse powder of the negative electrode active material is 30%.

### Example 4

A lithium-ion battery is prepared according to the method of Example 1, while the lithium-ion battery is tested according to the test method in Example 1, except the following.

The non-faradaic electric quantity Q C of the negative electrode plate is 0.26C, the non-faradaic capacitance Cdl nF of the negative electrode plate is 1.3nF, the potential interval ΔU V of the negative electrode active material layer is 0.2V, the surface contact angleθof the negative electrode active material layer with respect to the electrolyte solution is 20 °, the resistance R mΩ of the negative electrode active material layer is 10mΩ, the OI value of the negative electrode active material layer is 4.4, the amount percentage of fine powder of the negative electrode active material is 0, and the amount percentage of coarse powder of the negative electrode active material is 20%.

Meanwhile, no lithium salt additive is added to the electrolyte solution of Example 4, the thickness H nm of the protective film layer is 60 nm. The content X of the lithium salt additive in the electrolyte solution, the thickness H of the protective film layer, and the non-faradaic electric quantity Q of the negative electrode plate satisfy: 10X·H+Q=0.26.

### Example 5

A lithium-ion battery is prepared according to the method of Example 1, while the lithium-ion battery is tested according to the test method in Example 1, except the following.

The non-faradaic electric quantity Q C of the negative electrode plate is 2.5C, the non-faradaic capacitance Cdl nF of the negative electrode plate is 5.0nF, the potential interval ΔU V of the negative electrode active material layer is 0.5V, the surface contact angleθof the negative electrode active material layer with respect to the electrolyte solution is 10°, the resistance R mΩ of the negative electrode active material layer is SmS2, the OI value of the negative electrode active material layer is 2.1, the amount percentage of fine powder of the negative electrode active material is 10%, and the amount percentage of coarse powder of the negative electrode active material is 10%.

### Example 6

A lithium-ion battery is prepared according to the method of Example 1, while the lithium-ion battery is tested according to the test method in Example 1, except the following.

The non-faradaic electric quantity Q C of the negative electrode plate is 0.54C, the non-faradaic capacitance Cdl nF of the negative electrode plate is 2.7nF, the potential interval ΔU V of the negative electrode active material layer is 0.2V, the surface contact angleθof the negative electrode active material layer with respect to the electrolyte solution is 25°, the resistance R mΩ of the negative electrode active material layer is 10mΩ, the OI value of the negative electrode active material layer is 4, the amount percentage of fine powder of the negative electrode active material is 0, and the amount percentage of coarse powder of the negative electrode active material is 30%.

### Example 7

A lithium-ion battery is prepared according to the method of Example 1, while the lithium-ion battery is tested according to the test method in Example 1, except the following.

The non-faradaic electric quantity Q C of the negative electrode plate is 0.78C, the non-faradaic capacitance Cdl nF of the negative electrode plate is 3.9nF, the potential interval ΔU V of the negative electrode active material layer is 0.2V, the surface contact angleθof the negative electrode active material layer with respect to the electrolyte solution is 23°, the resistance R mΩ of the negative electrode active material layer is 8mΩ, the OI value of the negative electrode active material layer is 2.5, the amount percentage of fine powder of the negative electrode active material is 35%, and the amount percentage of coarse powder of the negative electrode active material is 30%.

### Example 8

A lithium-ion battery is prepared according to the method of Example 1, while the lithium-ion battery is tested according to the test method in Example 1, except the following.

The non-faradaic electric quantity Q C of the negative electrode plate is 0.96C, the non-faradaic capacitance Cdl nF of the negative electrode plate is 4.8nF, the potential interval ΔU V of the negative electrode active material layer is 0.2V, the surface contact angleθof the negative electrode active material layer with respect to the electrolyte solution is 12°, the resistance R mΩ of the negative electrode active material layer is SmS2, the OI value of the negative electrode active material layer is 2.2, the amount percentage of fine powder of the negative electrode active material is 15%, and the amount percentage of coarse powder of the negative electrode active material is 20%.

### Example 9

A lithium-ion battery is prepared according to the method of Example 1, while the lithium-ion battery is tested according to the test method in Example 1, except the following.

The non-faradaic electric quantity Q mΩ of the negative electrode plate is 1.11C, the non-faradaic capacitance Cdl nF of the negative electrode plate is 3.7nF, the potential interval ΔU V of the negative electrode active material layer is 0.3V, the surface contact angleθof the negative electrode active material layer with respect to the electrolyte solution is 22°, the resistance R mΩ of the negative electrode active material layer is 8mΩ, the OI value of the negative electrode active material layer is 2.4, the amount percentage of fine powder of the negative electrode active material is 35%, and the amount percentage of coarse powder of the negative electrode active material is 30%.

### Example 10

A lithium-ion battery is prepared according to the method of Example 1, while the lithium-ion battery is tested according to the test method in Example 1, except the following.

The non-faradaic electric quantity Q C of the negative electrode plate is 1.41C, the non-faradaic capacitance Cdl nF of the negative electrode plate is 4.7nF, the potential interval ΔU V of the negative electrode active material layer is 0.3V, the surface contact angleθof the negative electrode active material layer with respect to the electrolyte solution is 12°, the resistance R mΩ of the negative electrode active material layer is SmS2, the OI value of the negative electrode active material layer is 2.2, the amount percentage of fine powder of the negative electrode active material is 0, and the amount percentage of coarse powder of the negative electrode active material is 20%.

### Example 11

A lithium-ion battery is prepared according to the method of Example 1, while the lithium-ion battery is tested according to the test method in Example 1, except the following.

The non-faradaic electric quantity Q C of the negative electrode plate is 1.72C, the non-faradaic capacitance Cdl nF of the negative electrode plate is 4.3nF, the potential interval ΔU V of the negative electrode active material layer is 0.4V, the surface contact angleθof the negative electrode active material layer with respect to the electrolyte solution is 20°, the resistance R mΩ of the negative electrode active material layer is 6mΩ, the OI value of the negative electrode active material layer is 2.2, the amount percentage of fine powder of the negative electrode active material is 35%, and the amount percentage of coarse powder of the negative electrode active material is 25%.

### Example 12

A lithium-ion battery is prepared according to the method of Example 1, while the lithium-ion battery is tested according to the test method in Example 1, except the following.

The non-faradaic electric quantity Q C of the negative electrode plate is 0.12C, the non-faradaic capacitance Cdl nF of the negative electrode plate is 0.4nF, the potential interval ΔU V of the negative electrode active material layer is 0.3V, the surface contact angleθof the negative electrode active material layer with respect to the electrolyte solution is 37°, the resistance R mΩ of the negative electrode active material layer is 15mS2, the OI value of the negative electrode active material layer is 5.5, the amount percentage of fine powder of the negative electrode active material is 25%, and the amount percentage of coarse powder of the negative electrode active material is 25%.

### Example 13

A lithium-ion battery is prepared according to the method of Example 1, while the lithium-ion battery is tested according to the test method in Example 1, except the following.

The non-faradaic electric quantity Q C of the negative electrode plate is 0.225C, the non-faradaic capacitance Cdl nF of the negative electrode plate is 2.5nF, the potential interval ΔU V of the negative electrode active material layer is 0.09V, the surface contact angleθof the negative electrode active material layer with respect to the electrolyte solution is 20°, the resistance R mΩ of the negative electrode active material layer is 8mΩ, the OI value of the negative electrode active material layer is 6.5, the amount percentage of fine powder of the negative electrode active material is 10%, and the amount percentage of coarse powder of the negative electrode active material is 15%.

### Example 14

A lithium-ion battery is prepared according to the method of Example 1, while the lithium-ion battery is tested according to the test method in Example 1, except the following.

The non-faradaic electric quantity Q C of the negative electrode plate is 0.45C, the non-faradaic capacitance Cdl nF of the negative electrode plate is 1.5nF, the potential interval ΔU of the negative electrode active material layer is 0.3V, the surface contact angleθof the negative electrode active material layer with respect to the electrolyte solution is 25°, the resistance R mΩ of the negative electrode active material layer is 10mΩ, the OI value of the negative electrode active material layer is 7, the amount percentage of fine powder of the negative electrode active material is 25%, and the amount percentage of coarse powder of the negative electrode active material is 0%.

### Example 15

A lithium-ion battery is prepared according to the method of Example 1, while the lithium-ion battery is tested according to the test method in Example 1, except the following.

The non-faradaic electric quantity Q C of the negative electrode plate is 0.12C, the non-faradaic capacitance Cdl nF of the negative electrode plate is 1.2nF, the potential interval ΔU V of the negative electrode active material layer is 0.1V, the surface contact angleθof the negative electrode active material layer with respect to the electrolyte solution is 22°, the resistance R mΩ of the negative electrode active material layer is 8mΩ, the OI value of the negative electrode active material layer is 9, the amount percentage of fine powder of the negative electrode active material is 0%, and the amount percentage of coarse powder of the negative electrode active material is 22%.

### Example 16

A lithium-ion battery is prepared according to the method of Example 4, while the lithium-ion battery is tested according to the test method in Example 4, except the following.

The type of the lithium salt additive in the electrolyte solution is LiFSI, the content X of the lithium salt additive in the electrolyte solution is 1%, and the thickness H nm of the protective film layer is 120nm. The content X of the lithium salt additive in the electrolyte solution, the thickness H of the protective film layer, and the non-faradaic electric quantity Q of the negative electrode plate satisfy: 10X·H+Q=12.26.

### Example 17

A lithium-ion battery is prepared according to the method of Example 4, while the lithium-ion battery is tested according to the test method in Example 4, except the following.

The type of the lithium salt additive in the electrolyte solution is LiFSI, the content X of the lithium salt additive in the electrolyte solution is 0.5%, and the thickness H nm of the protective film layer is 100 nm. The content X of the lithium salt additive in the electrolyte solution, the thickness H of the protective film layer, and the non-faradaic electric quantity Q of the negative electrode plate satisfy: 10X·H+Q=5.26.

### Example 18

A lithium-ion battery is prepared according to the method of Example 4, while the lithium-ion battery is tested according to the test method in Example 4, except the following.

The type of the lithium salt additive in the electrolyte solution is LiFSI, the content X of the lithium salt additive in the electrolyte solution is 1.5%, and the thickness H nm of the protective film layer is 150 nm. The content X of the lithium salt additive in the electrolyte solution, the thickness H of the protective film layer, and the non-faradaic electric quantity Q of the negative electrode plate satisfy: 10X·H+Q=22.76.

### Example 19

A lithium-ion battery is prepared according to the method of Example 4, while the lithium-ion battery is tested according to the test method in Example 4, except the following.

The type of the lithium salt additive in the electrolyte solution is LiFSI, the content X of the lithium salt additive in the electrolyte solution is 2%, and the thickness H nm of the protective film layer is 180nm. The content X of the lithium salt additive in the electrolyte solution, the thickness H of the protective film layer, and the non-faradaic electric quantity Q of the negative electrode plate satisfy: 10X·H+Q=36.26.

### Example 20

A lithium-ion battery is prepared according to the method of Example 4, while the lithium-ion battery is tested according to the test method in Example 4, except the following.

The type of the lithium salt additive in the electrolyte solution is LiFSI, the content X of the lithium salt additive in the electrolyte solution is 2.5%, and the thickness H nm of the protective film layer is 200 nm. The content X of the lithium salt additive in the electrolyte solution, the thickness H of the protective film layer, and the non-faradaic electric quantity Q of the negative electrode plate satisfy: 10X·H+Q=50.26.

### Example 21

A lithium-ion battery is prepared according to the method of Example 4, while the lithium-ion battery is tested according to the test method in Example 4, except the following.

The type of the lithium salt additive in the electrolyte solution is LiPO₂F₂, the content X of the lithium salt additive in the electrolyte solution is 1%, and the thickness H nm of the protective film layer is 110nm. The content X of the lithium salt additive in the electrolyte solution, the thickness H of the protective film layer, and the non-faradaic electric quantity Q of the negative electrode plate satisfy: 10X·H+Q=11.26.

### Example 22

A lithium-ion battery is prepared according to the method of Example 4, while the lithium-ion battery is tested according to the test method in Example 4, except the following.

The type of the lithium salt additive in the electrolyte solution is LiPO₂F₂, the content X of the lithium salt additive in the electrolyte solution is 0.8%, and the thickness H nm of the protective film layer is 120nm. The content X of the lithium salt additive in the electrolyte solution, the thickness H of the protective film layer, and the non-faradaic electric quantity Q of the negative electrode plate satisfy: 10X·H+Q=5.26.

### Example 23

A lithium-ion battery is prepared according to the method of Example 4, while the lithium-ion battery is tested according to the test method in Example 4, except the following.

The type of the lithium salt additive in the electrolyte solution is LiBF₄, the content X of the lithium salt additive in the electrolyte solution is 0.5%, and the thickness H nm of the protective film layer is 120nm. The content X of the lithium salt additive in the electrolyte solution, the thickness H of the protective film layer, and the non-faradaic electric quantity Q of the negative electrode plate satisfy: 10X·H+Q=5.26.

### Example 24

A lithium-ion battery is prepared according to the method of Example 4, while the lithium-ion battery is tested according to the test method in Example 4, except the following.

The type of the lithium salt additive in the electrolyte solution is LiFSI+ LiPO₂F₂, the content of the LiFSI in the electrolyte solution is 0.5%, the content of the LiPO2F2 in the electrolyte solution is 0.3%, and the thickness H nm of the protective film layer is 120nm. The content X of the lithium salt additive in the electrolyte solution, the thickness H of the protective film layer, and the non-faradaic electric quantity Q of the negative electrode plate satisfy: 10X·H+Q=9.86.

### Example 25

A lithium-ion battery is prepared according to the method of Example 4, while the lithium-ion battery is tested according to the test method in Example 4, except the following.

The type of the lithium salt additive in the electrolyte solution is LiFSI+ LiPO₂F₂, the content of LiFSI in the electrolyte solution is 0.5%, the content of LiPO₂F₂ in the electrolyte solution is 0.5%, and the thickness of the protective film layer H nm is 150 nm. The content X of the lithium salt additive in the electrolyte solution, the thickness H of the protective film layer, and the non-faradaic electric quantity Q of the negative electrode plate satisfy: 10X·H+Q=15.26.

### Example 26

A lithium-ion battery is prepared according to the method of Example 4, while the lithium-ion battery is tested according to the test method in Example 4, except the following.

The type of the lithium salt additive in the electrolyte solution is LiFSI+LiBF₄, the content of LiFSI in the electrolyte solution is 0.3%, the content of LiBF₄ in the electrolyte solution is 0.2%, and the thickness H nm of the protective film layer is 130nm. The content X of the lithium salt additive in the electrolyte solution, the thickness H of the protective film layer, and the non-faradaic electric quantity Q of the negative electrode plate satisfy: 10X·H+Q=6.75.

### Comparative Example 1

A lithium-ion battery is prepared according to the method of Example 1, while the lithium-ion battery is tested according to the test method in Example 1, except the following.

The non-faradaic electric quantity Q C of the negative electrode plate is 3C, the non-faradaic capacitance Cdl nF of the negative electrode plate is 6.0nF, the potential interval ΔU V of the negative electrode active material layer is 0.5V, the surface contact angleθof the negative electrode active material layer with respect to the electrolyte solution is 45°, the resistance R mΩ of the negative electrode active material layer is SmS2, the OI value of the negative electrode active material layer is 10, the amount percentage of fine powder of the negative electrode active material is 0, and the amount percentage of coarse powder of the negative electrode active material is 65%.

### Comparative Example 2

A lithium-ion battery is prepared according to the method of Example 1, while the lithium-ion battery is tested according to the test method in Example 1, except the following.

The non-faradaic electric quantity Q C of the negative electrode plate is 0.02C, the non-faradaic capacitance Cdl nF of the negative electrode plate is 0.2nF, the potential interval ΔU V of the negative electrode active material layer is 0.1V, the surface contact angleθof the negative electrode active material layer with respect to the electrolyte solution is 10°, the resistance R mΩ of the negative electrode active material layer is 25mS2, the OI value of the negative electrode active material layer is 8, the amount percentage of fine powder of the negative electrode active material is 85%, and the amount percentage of coarse powder of the negative electrode active material is 65%.

### III. Test results

Table 1 shows the effect of the non-faradaic electric quantity Q C of the negative electrode plate, the non-faradaic capacitance Cdl nF of the negative electrode plate, the potential interval ΔU V of the negative electrode active material layer, the surface contact angleθof the negative electrode active material layer with respect to the electrolyte solution, the resistance R mΩ of the negative electrode active material layer, the OI value of the negative electrode active material layer, the amount percentage of the fine powder of the negative electrode active material, and the amount percentage of the coarse powder of the negative electrode active material on the normal temperature cycle performance and the high temperature cycle performance of the lithium-ion battery.

**Table 1**

| | Cdl | ΔU | Q | θ(°) | R | OI | Amount percenta ge of fine powder | Amount percenta ge of coarse powder | 25°C cycle life | 45°C cycle capacity retention |
|---|---|---|---|---|---|---|---|---|---|---|
| Example 1 | 1.4 | 0.2 | 0.28 | 21 | 9 | 4.4 | 20% | 0% | 3000 | 90.1 |
| Example 2 | 0.7 | 0.1 | 0.07 | 35 | 18 | 5 | 60% | 50% | 2800 | 88.7 |
| Example 3 | 4.0 | 0.5 | 2 | 22 | 8 | 2.5 | 35% | 30% | 3000 | 91.0 |
| Example 4 | 1.3 | 0.2 | 0.26 | 20 | 10 | 4.4 | 0 | 20% | 3200 | 91.5 |
| Example 5 | 5.0 | 0.5 | 2.5 | 10 | 5 | 2.1 | 10% | 10% | 2700 | 89.0 |
| Example 6 | 2.7 | 0.2 | 0.54 | 25 | 10 | 4 | 0 | 30% | 3000 | 90.6 |
| Example 7 | 3.9 | 0.2 | 0.78 | 23 | 8 | 2.5 | 35% | 30% | 2900 | 88.5 |
| Example 8 | 4.8 | 0.2 | 0.96 | 12 | 5 | 2.2 | 15% | 20% | 3000 | 90.2 |
| Example 9 | 3.7 | 0.3 | 1.11 | 22 | 8 | 2.4 | 35% | 30% | 2800 | 87.4 |
| Example 10 | 4.7 | 0.3 | 1.41 | 12 | 5 | 2.2 | 0 | 20% | 2900 | 87.2 |
| Example 11 | 4.3 | 0.4 | 1.72 | 20 | 6 | 2.2 | 35% | 25% | 2800 | 88.1 |
| Example 12 | 0.4 | 0.3 | 0.12 | 37 | 15 | 5.5 | 25% | 25% | 2750 | 86.8 |
| Example 13 | 2.5 | 0.0 9 | 0.22 5 | 20 | 8 | 6.5 | 10% | 15% | 2950 | 88.9 |
| Example 14 | 1.5 | 0.3 | 0.45 | 25 | 10 | 7 | 25% | 0% | 3000 | 89.8 |
| Example 15 | 1.2 | 0.1 | 0.12 | 22 | 8 | 9 | 0% | 22% | 2800 | 87.0 |
| Comparati ve Example 1 | 6.0 | 0.5 | 3 | 45 | 5 | 10 | 0 | 65% | 2200 | 71.9 |
| Comparati ve Example 2 | 0.2 | 0.1 | 0.02 | 10 | 25 | 8 | 85% | 65% | 2000 | 69.3 |

The results show that, in a case that the non-faradaic electric quantity Q C of the negative electrode plate is controlled in the range of 0.05 C~2.5C, the non-faradaic capacitance Cdl nF of the negative electrode plate is controlled in the range of 0.5nF~5nF, the potential interval ΔU V of the negative electrode active material layer is controlled in the range of 0.1V~0.5V, the surface contact angleθof the negative electrode active material layer with respect to the electrolyte solution is controlled in the range of 10°~40°, the resistance R mΩ of the negative electrode active material layer is controlled in the range of 5 mΩ~20 mΩ, the OI value of the negative electrode active material layer is controlled in the range of 2~1 5, the amount percentage of the fine powder of the negative electrode active material is controlled in the range of 0-80%, and the amount percentage of the coarse powder of the negative electrode active material is controlled in the range of 0-60%, the cycle life of the lithium-ion battery can be significantly prolonged.

On this basis, in a case that the non-faradaic capacitance Cdl nF of the negative electrode plate is controlled to be in the range of 1.4nF~4.3nF, the surface contact angle θof the negative electrode active material layer with respect to the electrolyte solution is controlled to be in the range of 12°~35°, the resistance R mΩ of the negative electrode active material layer is controlled to be in the range of 5 mΩ~12 mΩ, the OI value of the negative electrode active material layer is controlled to be in the range of 2-10, the amount percentage of fine powder of the negative electrode active material is controlled to be in the range of 0-40%, and the amount percentage of coarse powder of the negative electrode active material is controlled to be in the range of 0-30%, the cycle life of the lithium-ion battery can be further improved.

Table 2 shows the effect of the type of the lithium salt additive in the electrolyte solution, the content X of the lithium salt additive in the electrolyte solution, the thickness H nm of the protective film layer, and the relationship among the content X of the lithium salt additive in the electrolyte solution, the thickness H of the protective film layer, and the non-faradaic electric quantity Q of the negative electrode plate, which satisifies:10X.·H+Q, on the normal temperature cycle performance and high temperature cycle performance of the lithium-ion battery.

**Table 2**

| | Type of lithium salt additive | X | H | 10X·H+Q | 25°C cycle life | 45°C cycle capacity retention |
|---|---|---|---|---|---|---|
| Example 4 | / | / | 60 | 0.26 | 3200 | 91.5 |
| Example 16 | LiFSI | 1% | 120 | 12.26 | 3450 | 92.8 |
| Example 17 | LiFSI | 0.5% | 100 | 5.26 | 3250 | 91.6 |
| Example 18 | LiFSI | 1.5% | 150 | 22.76 | 3500 | 92.1 |
| Example 19 | LiFSI | 2% | 180 | 36.26 | 3300 | 91.4 |
| Example 20 | LiFSI | 2.5% | 200 | 50.26 | 3250 | 91.2 |
| Example 21 | LiPO₂F₂ | 1% | 110 | 11.26 | 3450 | 91.9 |
| Example 22 | LiPO₂F₂ | 0.8% | 120 | 9.86 | 3300 | 91.7 |
| Example 23 | LiBF4 | 0.5% | 100 | 5.26 | 2900 | 89.5 |
| Example 24 | LiFSI+LiPO₂F₂ | 0.5%+0.3% | 120 | 9.86 | 3550 | 92.4 |
| Example 25 | LiFSI+LiPO₂F₂ | 0.5%+0.5% | 150 | 15.26 | 3600 | 92.8 |
| Example 26 | LiFSI+LiBF4 | 0.3%+0.2% | 130 | 6.76 | 3300 | 91.8 |

The results show that, in a case that the type of the lithium salt additive in the electrolyte solution is controlled to be one or more of lithium tetrafluoroborate (LiBF₄), lithium bisoxalate (LiBOB), lithium difluorophosphate (LiPO₂F₂), lithium bis-trifluoromethanesulfonimide (LiTFSI), and lithium bisfluorosulfonimide (LiFSI); the content X of the lithium salt additive in the electrolyte solution is controlled to be in the range of 0.1%~2%, the thickness H nm of the protective film layer is controlled to be in the range of 5 nm ~180nm; and the relationship among the content X of the lithium salt additive in the electrolyte solution, the thickness H of the protective film layer, and the non-faradaic electric quantity Q of the negative electrode plate, which satisfies: 10X·H+Q, is controlled in the range of 0.4-36, the cycle life of the lithium-ion battery can be significantly improved.

The description provided by the above steps is merely intended to assist in understanding the methods, structures, and core concepts of the present application. To those of ordinary skill in the art, several modifications and changes may be made to the present application without departing from the principles of the present application, which also fall in the scope of the claims of the present application.

## Claims

1. A secondary battery, comprising a positive electrode plate, a separator, an electrolyte solution, and a negative electrode plate, wherein the negative electrode plate comprises:
a negative electrode current collector; and
a negative electrode active material layer disposed on the negative electrode current collector;
wherein non-faradaic electric quantity of the negative electrode plate is Q C, and Q satisfies: 0.05≤Q≤2.5, wherein Q=Cdl×ΔU, Cdl nF is non-faradaic capacitance of the negative electrode plate, and ΔU V is potential interval of the negative electrode active material layer.

2. The secondary battery of claim 1, wherein the non-faradaic capacitance Cdl satisfies: 0.5≤Cdl≤5, and the potential interval ΔU satisfies: 0.1≤ΔU≤0.5.

3. The secondary battery of any one of claims 1 to 2, wherein the negative electrode active material layer comprises one or more of artificial graphite, natural graphite, soft carbon, hard carbon, amorphous carbon, carbon fiber carbon nanotubes, or mesocarbon microspheres.

4. The secondary battery of any one of claims 1 to 3, wherein a surface contact angle θ of the negative electrode active material layer with respect to the electrolyte solution satisfies: 10°≤θ≤40°.

5. The secondary battery of any one of claims 1 to 4, wherein a resistance of the negative electrode active material layer is R mΩ, and R satisfies: 5≤R≤20.

6. The secondary battery of any one of claims 1 to 5, wherein the negative electrode active material layer has an OI value ranging from 2 to 15.

7. The secondary battery of any one of claims 1 to 6, wherein the negative electrode active material layer comprises a negative electrode active material, amount percentage of fine powder of the negative electrode active material ranges from 0 to 80%, and amount percentage of coarse powder of the negative electrode active material ranges from 0 to 60%;
wherein the fine powder is a particle in the negative electrode active material having a particle size less than or equal to 2.2µm, and the coarse powder is a particle in the negative electrode active material particles having a particle size greater than or equal to 35µm.

8. The secondary battery of claim 7, wherein the amount percentage of the fine powder of the negative electrode active material ranges from 0 to 40%; and
the amount percentage of the coarse powder of the negative electrode active material ranges from 0 to 30%.

9. The secondary battery of any one of claims 1 to 8, wherein the electrolyte solution comprises a lithium salt additive, and the ithium salt additive comprises one or more of lithium tetrafluoroborate, lithium bisoxalate borate, lithium difluorophosphate, lithium bis-trifluoromethanesulfonimide, and lithium bisfluorosulfonimide.

10. The secondary battery of claim 9, wherein the content X of the lithium salt additive in the electrolyte solution satisfies 0.1%≤X≤2%.

11. The secondary battery of any one of claims 1 to 10, wherein the negative electrode active material layer comprises a protective film layer having a thickness H nm, and formula 0.4≤10X·H+Q≤36 is satisfied.

12. The secondary battery of claim 11, wherein the thickness H of the protective film layer satisfies: 5≤H≤180.

13. An electrochemical device, comprising the secondary battery of any one of claims 1 to 12.
